# EUROPEAN PATENT SPECIFICATION

(11) **EP 3 916 531 B1**
(45) Date of publication and mention of the grant of the patent: **15.10.2025**
(21) Application number: 20176818.1
(22) Date of filing: 27.05.2020
(51) Int. Cl.: G06F 3/04845, G02B 21/36, G06F 3/038, G06F 3/0362

(54) **USER INPUT DEVICE FOR NAVIGATING VIRTUAL MICROSCOPY SLIDES AND OTHER HUGE IMAGES**
BENUTZEREINGABEVORRICHTUNG ZUR NAVIGATION VON VIRTUELLEN MIKROSKOPOBJEKTTRÄGERN UND ANDEREN GROSSEN BILDERN
DISPOSITIF D'ENTRÉE D'UTILISATEUR PERMETTANT DE NAVIGUER SUR DES LAMES PORTE-OBJETS DE MICROSCOPE VIRTUEL ET D'AUTRES IMAGES ÉNORMES

(43) Date of publication of application: 01.12.2021
(73) Proprietor: The Chinese University of Hong Kong, Shatin, New Territories 999077 (HK)
(72) Inventor: CHAN, Cheong Kin Ronald, HKSAR (HK); TO, Ka Fai, Hong Kong (HK); CHEUNG, Kwok Chiu, Hong Kong (HK)
(74) Representative: Bardehle Pagenberg Partnerschaft mbB Patentanwälte Rechtsanwälte

(56) References cited:
- US-A1- 2012 092 247

## Description

### TECHNICAL FIELD

This disclosure relates generally to user input devices for computer systems and in particular to a user input device for navigating virtual microscopy slides and other huge images.

### BACKGROUND

In traditional microscopy, a glass slide is prepared with a sample of tissue or other substance to be viewed. A user looks through the eyepiece of the microscope to view the sample at a particular factor of magnification. While viewing the sample, the user can manipulate controls of the microscope to move the slide relative to the objective lens in two directions (referred to herein as x and y directions) and/or to change the magnification power of the microscope (also referred to as zooming).

With the advent of high-resolution digital cameras and video display devices, "virtual" microscopy has become common. Instead of looking into a microscope, the user views a computer screen that shows images that were captured using a microscope and high-resolution camera. By operating computer keys or a mouse, the user can pan the image, change the magnification, add annotations, and so on. In some virtual microscopy applications, an imaging system connected to a microscope may be used to capture, digitize, and store images of entire slides at various magnifications, and the stored image data files (which can be huge) may be used to render images for viewing by a user. For instance, whole slide imaging (WSI) systems allow automatic digitization of an entire microscope slide, thereby creating a huge data file from which images can be displayed and manipulated using appropriate virtual microscopy application programs executed on a conventional computer system.

One challenge for the user of virtual microscopy systems is that the user input devices of conventional computer systems (e.g., keyboard and mouse) are ill-suited for manipulating huge images. For example, it is well-known to click and drag a computer mouse across a surface to pan an image. However, mouse panning does not provide precise control. Keyboard input (e.g., using arrow keys) can be more precise but may be less intuitive, particularly for users who have been trained using physical microscopes. A more intuitive user interface device suitable for controlling virtual microscopy applications would therefore be desirable.
US 2012/0092247 A1 discloses a computer input device for manipulating a digital image displayed on a display apparatus operably connected to the computer input device, the device comprising a housing comprising a base having a bottom portion for optionally resting on a support surface, an arm extending upward from the base and terminating at a top portion, and a stage extending outward from the arm at a location intermediate the base and the top portion. The stage comprises a distal portion proximate the arm, a proximal portion opposite the distal portion, wherein a y-axis passes through the distal portion, the proximal portion, and the arm, wherein the stage further comprises a top surface defining an xy-plane, wherein the xy-plane optionally generally aligns with the bottom portion of the base, wherein the xy-plane comprises the y-axis and an x-axis transverse to the y-axis. The input device further comprises an x-axis stage controller attached to the housing and configured to communicate lateral movement of the digital image displayed on the display apparatus along an x-axis, the x-axis stage controller optionally extending from the stage and optionally rotatable about a first axis that may be generally aligned with the z-axis, wherein the z-axis is generally transverse to the xy-plane, and a y-axis stage controller attached to the housing and configured to communicate lateral movement of the digital image displayed on the display apparatus along a y-axis, the y-axis stage controller optionally extending from the stage and optionally rotatable about a second axis that may be generally aligned with the z-axis, wherein the first and second axes are, optionally, the same axis.

### SUMMARY

The invention is set out in the appended set of claims. Disclosed herein are examples (also referred to as "embodiments") of a user input device for use with virtual microscopy systems or other computer systems that support user interaction with huge images or image files. The user input device provides two user-operable panning controls for panning an image in each of two dimensions (sometimes referred to herein as x and y). The user-operable panning controls can be shaped and positioned similarly to movement controls commonly used on physical microscopes. For instance, the user-operable panning controls can be rotary controls operated by turning about an axis. In some embodiments, two user-operable rotary panning controls can be arranged along a common axis of rotation; the common axis can be, for example, a vertical axis.

The user input device can also provide a user-operable zooming control. The user-operable zooming control can be, for example, a lever-and-push type switch that has a neutral position from which the switch can be deflected in either of two opposing directions by applying finger pressure. Deflection of the switch in one direction can indicate increased magnification (enlarge, or zoom in) while deflection of the switch in the opposing direction indicates decreased magnification (diminish, or zoom out).

The user input device can also provide other user-operable controls, such as various push buttons to initiate operations such as image capture and/or image annotation.

The user input device can be designed for compatibility with existing virtual microscopy applications or other applications implemented on conventional computer systems. For example, many existing virtual microscopy applications accept user input in the form of keystroke events such as "up arrow," "down arrow," and so on. Accordingly, the user input device can include a processor that generates keystroke events in response to operation of the user-operable controls. For example, a keystroke event can be generated in response to rotation of a rotary control by a target amount. In some embodiments, the target amount of rotation can be determined based on a current magnification factor of the displayed image.

The following detailed description, together with the accompanying drawings, will provide a better understanding of the nature and advantages of the claimed invention.

### BRIEF DESCRIPTION OF THE DRAWINGS

FIG. 1A shows a perspective view and FIG. 1B shows a side view of a user input device according to an embodiment of the invention.
FIG. 2 shows a simplified block diagram of a user input device according to some embodiments.
FIG. 3 shows a flow diagram of a process for operation of a user input device according to some embodiments.
FIG. 4 is a flow diagram of a process that can be used in some embodiments to determine whether to generate a keystroke event.
FIG. 5 shows an example of a lookup table that can be used in some embodiments to determine the number of encoder steps per keystroke based on the magnification factor.

### DETAILED DESCRIPTION

Examples of user input devices incorporating features of the present invention will now be described. For purposes of description, it is assumed that the user input device is used in combination with a computer system (such as a conventional desktop or laptop computer or any other computer system having a display) that executes a virtual microscopy application program to display images from an image data file (e.g., an image data file obtained using a WSI system to scan a glass slide). The computer system and virtual microscopy application program can be of conventional design. In embodiments described below, it is assumed that the virtual microscopy application program has been designed and coded such that the user can manipulate the displayed image using a conventional alphanumeric keyboard that is part of the computer system. When the user presses a key of the keyboard, the keyboard generates a corresponding "keystroke" event signal indicating which key was pressed. The keystroke event signal is communicated from the keyboard (e.g., via an operating system) to the virtual microscopy application program. In response to the keystroke event signal, the virtual microscopy application program performs an action on the displayed image, with the action depending on the particular key that was pressed. For example, pressing a particular directional arrow key (up, down, left right) on a keyboard may result in panning the image in the corresponding direction by a particular distance (or step). Other keystroke events may result in invoking other operations, such as changing magnification of the image, capturing a displayed image (e.g., saving the displayed image to a file that can be stored and/or sent to other systems), adding an annotation (e.g., a mark) to the image, and so on.

As described below, a user input device according to an embodiment of the present invention can generate the particular keystroke events that the virtual microscopy application is programmed to process. Accordingly, some user input devices as described herein can be used with existing virtual microscopy application programs, without changes to the application software. However, those skilled in the art with access to this disclosure will appreciate that embodiments of the present invention can also be used in connection with other types of virtual microscopy application programs or other programs that are usable to display and manipulate huge image data files.

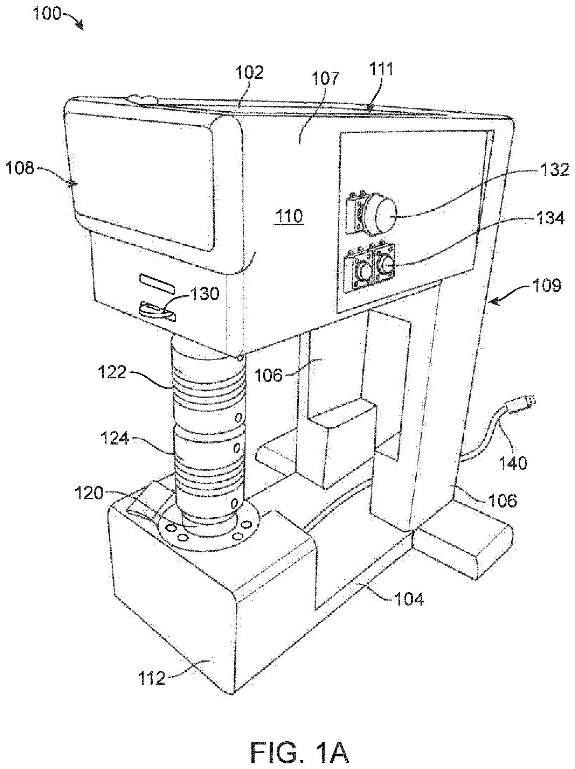

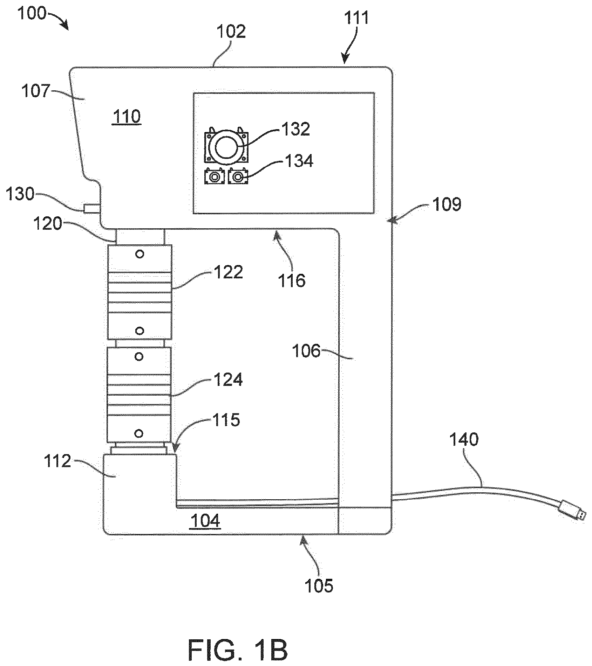

FIG. 1A shows a perspective view and FIG. 1B shows a side view of a user input device 100 according to an embodiment of the invention. User input device 100 in this example has a housing 102 that can be shaped and sized to resemble the base portion of a conventional optical microscope. Housing 102 has a base 104 with a flat bottom surface 105 that can rest on a table or other flat support surface, one or more support legs 106 extending upward from base 104, and a main body 107 supported at least partially by support legs 106. Main body 107 has a front surface 108, a rear surface 109, side surfaces 110, and a top surface 111 that can be flat, similar to a microscope stage. Overall dimensions of user input device 100 can be, for example, about 20 cm (height) by about 14 cm (width) by about 15 cm (depth); however, particular dimensions or form factor are not critical. Housing 102 can be made of plastic (e.g., PLA or ABS plastic, or other durable plastic) and formed using injection molding, 3D printing, or other techniques. Other materials and manufacturing techniques can be substituted. In some embodiments, ballast weights may be disposed within housing 102 to provide stability, e.g., to prevent sliding or tipping of user input device 102 during use.

Base 104 can include a front section 112 that supports a vertical post 120, which can be manufactured as a separate component made of plastic or metal and attached between a top surface 115 of front section 112 and a bottom surface 116 of main body 107. Disposed on vertical post 120 are a first user-operable rotary control, e.g., an upper rotary control knob 122, and a second user-operable rotary control, e.g., a lower rotary control knob 124. In this embodiment, each of upper and lower rotary control knobs 122, 124 can be independently rotated by a user about a common axis (the center of vertical post 120), e.g., by applying pressure using the thumb and forefinger. Via vertical post 120, rotary control knobs 122, 124 are rotatably coupled to housing 102 in a manner that allows a user to grasp any portion of the outer surface of rotary control knobs 122, 124. Rotary control knobs 122, 124 are examples of user-operable rotary controls. Other user-operable rotary controls, such as dials or wheels, may be substituted, and the user-operable rotary controls may be arranged along a common axis of rotation.

Disposed on front surface 108 of main body 107 is a user-operable switch control 130. In this embodiment, user-operable switch control 130 can be a "lever and push" switch that is biased toward a neutral position, from which the switch can be deflected to either the left or right by applying pressure; upon release of the pressure, the switch returns to the neutral position. In this example, the arrangement of rotary control knobs 122, 124 and switch control 130 is similar to an arrangement of controls of some commonly used physical microscopes. Other controls can also be provided. For example, right side surface 112 includes push buttons 132, 134.

To support communication between user input device 100 and a computer system (not shown in FIGs. 1A-1B), rear surface 109 (or another surface of housing 102) can include a connection port for a cable 140. Cable 140 can be, for instance, a USB cable. In some embodiments, the connection port is exposed at rear surface 108 and cable 140 can be detachably connected to user device 140. In other embodiments, the connection port is inside housing 102 and cable 140 is captively connected to user device 140. The distal end of cable 140 (not shown in FIGs. 1A-1B) can include a connector (e.g., a USB plug connector) that connects to a standard peripheral-device port in a computer system (e.g., a USB port).

Using cable 140, user input device 100 can be coupled to a computer system (such a conventional desktop or laptop computer system) that executes a virtual microscopy application program. As noted above, the virtual microscopy application program is assumed to be responsive to keystroke events.

In operation, user input device 100 can detect manipulation of control elements located thereon, such as any of controls 122, 124, 130, 132, 134. In response to manipulation of a particular control element, user input device 100 can generate one or more keystroke event signals and communicate the keystroke event signals to the connected computer system via cable 140. The type and number of keystroke events signals that are generated and sent can depend on which control is manipulated and particular characteristics of the manipulation.

The keystroke event signals include "movement" keystroke event signals, such as up-arrow, down-arrow, left-arrow or right-arrow keystroke event signals (or other keystroke event signals where the key identified as being pressed is mapped by the virtual microscopy application program to movement of an image). For example, in response to rotation of upper rotary control knob 122, user device 100 can generate up-arrow or down-arrow keystroke event signals. As a more specific example, clockwise rotation of upper rotary control knob 122 can be mapped to one or more up-arrow keystroke event signals while counterclockwise rotation of lower rotary control knob 122 is mapped to one or more down-arrow keystroke event signals. In some embodiments, a keystroke event signal can be generated whenever upper rotary control knob is rotated by a specific amount (e.g., degrees of arc), and the specific amount of rotation that corresponds to a keystroke event can be determined based on a current magnification level of an image. Examples are described below.

Similarly, in response to rotation of lower rotary control knob 124, user device 100 can generate left-arrow or right-arrow keystroke event signals. As a more specific example, clockwise rotation of lower rotary control knob 124 can be mapped to one or more left-arrow keystroke event signals while counterclockwise rotation of lower rotary control knob 124 is mapped to one or more right-arrow keystroke event signals. In some embodiments, a keystroke event signal can be generated whenever lower rotary control knob 124 is rotated by a specific amount (e.g., degrees of arc), and the specific amount of rotation that corresponds to a keystroke event can be determined based on a current magnification level of an image. Examples are described below.

As another example, in response to deflection of switch control 130, user device 100 can generate "zooming" keystroke event signals that the virtual microscopy application program maps to increase magnification (enlarge, or zoom in) or decrease magnification (diminish, or zoom out). As a more specific example, deflection of switch control 130 to the left can be mapped to one or more "decrease magnification" keystroke event signals (i.e., a signal indicating a press of a keyboard key that the virtual microscopy application program has mapped to the decrease-magnification operation) while deflection of switch control 130 to the right is mapped to one or more "increase magnification" keystroke event signals (i.e., a signal indicating a press of a different keyboard key that the virtual microscopy application program has mapped to the decrease-magnification operation). In some embodiments, the number of keystroke event signals generated can be based on the duration of holding switch control 130 in the deflected position; in other embodiments, one keystroke event is generated per each deflect-and-release operation of switch control 130.

As still other examples, in response to a push of button 132, user device 100 can generate a "capture" keystroke event signal (i.e., a press of a keyboard key that the virtual microscopy application program has mapped to an image-capture instruction). In response to a push of button 134, user device 100 can generate an "annotation" keystroke event signal (i.e., a press of a keyboard key that the virtual microscopy application program has mapped to an image-capture instruction).

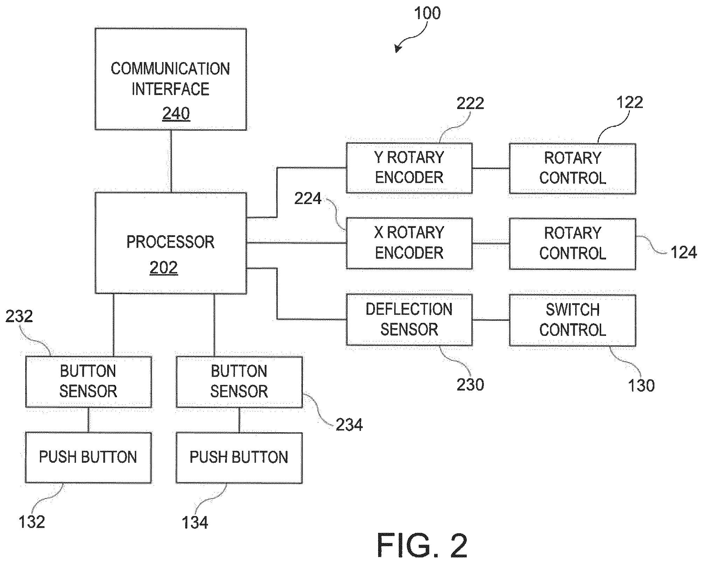

FIG. 2 shows a simplified block diagram of user input device 100 according to some embodiments. Except for the user-operable controls 122, 124, 130, 132, 134, the components shown can be disposed inside housing 102 and/or inside vertical post 120. Internal components of user input device 100 in this example include processor 202, communication interface 204, and sensors such as "Y" rotary encoder 222, "X" rotary encoder 224, deflection sensor 226, and button sensor 232.

Rotary encoders 222 and 224 are coupled to rotary controls 122 and 124, respectively. Each rotary encoder 222, 224 can be, for example, a conventional AB two-phase incremental rotary controller with 600 steps (or 600 pulses per 360 degrees of rotation), or any other encoder that generates signals based on an amount and direction of rotation of a control dial or knob. The particular number of steps (or pulses) per revolution can be varied as desired. Each rotary controller 222, 224 can provide an output signal to processor 202 indicating the current rotational position of the associated rotary control 122, 124.

Deflection sensor 230 is coupled to switch control 130. Deflection sensor 230 can include, for example, a pair of circuits connected to switch control 130 such that both circuits are open when switch control 130 is in the neutral position, a first circuit of the pair is closed when switch control 130 is deflected in one direction (e.g., to the left) and a second circuit of the pair is closed when switch control 130 is deflected in the opposite direction (e.g., to the right). Based on the states of the two circuits, deflection sensor 230 can generate a signal to processor 202 indicating the state of switch control 130 (e.g., neutral, left, or right).

Button sensors 232, 234 are coupled to push buttons 132, 134, respectively. Each button sensor 232, 234 can include, for example, a circuit that is closed while the corresponding button 132, 134 is pressed and open when the corresponding button 132, 134 is released. Based on the state of its circuit, each button sensor 232, 234 can generate a signal to processor 202 indicating whether button 132, 134 has been pressed.

Processor 202 can be a programmable microprocessor or microcontroller of conventional design, such as a standard ATMega32U4 (manufactured by Atmel Corp. of San Jose, California), a field-programmable gate array (FPGA), application-specific integrated circuit (ASIC), or the like. Processor 202 can be configured (e.g., by suitable program code and/or logic circuitry) to generate keystroke event signals in response to signals received from encoders 222, 224 and sensors 230, 232, 234. Specific examples of control logic that can be implemented in processor 202 are described below.

Communication interface 240 is coupled to processor 202. Communication interface 240 can be implemented using a combination of hardware and software to support transmitting and receiving data signals between user device 100 and a computer system. For example, communication interface 240 can implement a conventional USB interface that provides data and power lines connected to cable 140, a conventional wireless Bluetooth interface (i.e., any interface conforming to any of the Bluetooth^{®} family of standards promulgated by Bluetooth SIG, Inc.) that includes RF transceiver circuitry, or the like. Communication interface 240 can also support any suitable protocol for communicating keystroke events such as the USB Human Interface Device class (USB HID class) protocol.

In some embodiments, operating power for user interface device 100 is provided via communication interface 240 (e.g., using USB power lines). Alternatively, user interface device 100 can have a separate power source, such as an onboard battery (which can be single-use or rechargeable as desired).

It will be appreciated that user device 100 is illustrative and that variations and modifications are possible. The particular size, shape, and materials of user device 100 can be varied, as can the location and arrangement of controls. In some embodiments, the location and arrangement of controls is chosen to correspond to the location and arrangement of controls of a physical microscope, which can make operation of the user input device more intuitive to users familiar with physical microscopes. For instance, like a physical microscope, the user input device can remain stationary on a surface such as a desktop or tabletop while user manipulates the controls. In various embodiments, user-operable rotary controls (such as knobs, wheels, or dials) can be replaced with other types of controllers such as linear sliders with linear encoders that support determining a direction and amount of displacement. Controls described as switches and buttons can be replaced with touch sensors (e.g., resistive or capacitive touch sensors that can register proximity or contact of a finger without deflection), rocker switches, dials, or other controllers. Any number and combination of controls may be provided. The communication interface used to couple user device 100 to a computer system can also be varied. For example, while USB is mentioned above, other interfaces can be used, including other wired interfaces (including any class or type of USB interface) and wireless interfaces such as Bluetooth interfaces. User input devices of the kind described herein can be used with a variety of computer systems and software applications, provided that the computer systems and software applications are capable of recognizing and processing the keystroke event signals generated by the user input device.

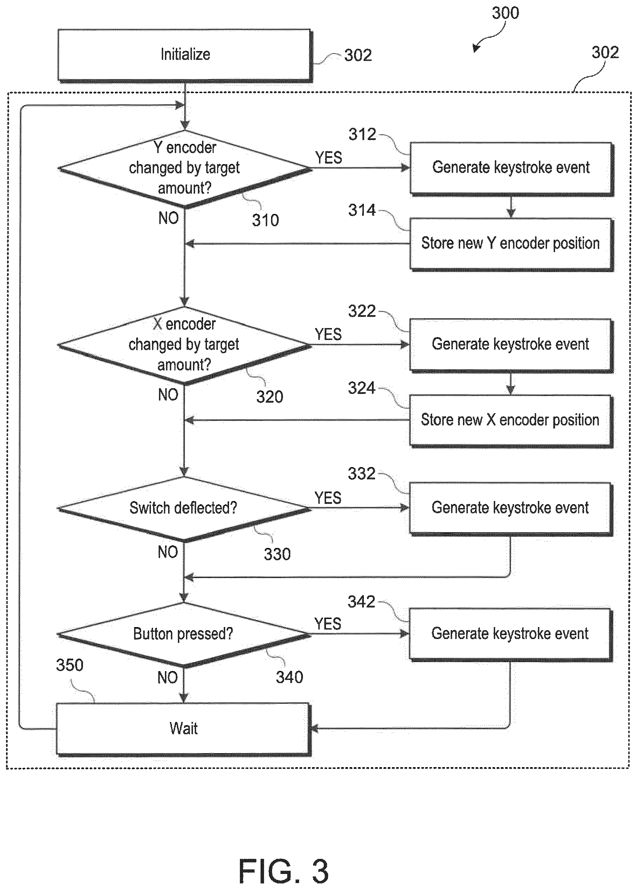

FIG. 3 shows a flow diagram of a process 300 for operation of user input device 100 according to some embodiments. Process 300 can be implemented, e.g., in processor 202. Process 300 provides a primary loop in which encoders and other sensors are periodically polled and detection of various state changes result in generating keystroke event signals that can be sent to a coupled computer system, e.g., using communication interface 240.

At block 302, process 300 can perform initialization. Initialization can include performing initial self-diagnostics; establishing communication with a computer system; determining and storing initial position readings of encoders 222, 224, deflection sensor 230, and button sensors 232, 234; setting an initial magnification value; and so on.

After initialization, process 300 enters the primary loop 302. At block 310, process 300 determines whether the position value for Y encoder 222 has changed by a target amount. For example, a current position reading from Y encoder 222 can be compared to the stored value. The difference between the current position reading from Y encoder 222 and the stored value can be compared to a target amount of movement (e.g., a target number of steps), which can be selected based on the current magnification value as described below. If the Y encoder position value has changed by the target amount, then at block 312, process 300 can generate a keystroke event signal. In some embodiments, the type of keystroke event signal can be determined by the direction of change (e.g., up-arrow for clockwise direction, down-arrow for counterclockwise direction). At block 314, process 300 can store the new Y encoder position value for use in the next iteration of primary loop 302.

At block 320, process 300 determines whether the position value for X encoder 224 has changed by a target amount. For example, a current position reading from X encoder 224 can be compared to the stored value. The difference between the current position reading from X encoder 224 and the stored value can be compared to a target amount of movement (e.g., a target number of steps), which can be selected based on the current magnification value as described below. If the X encoder position value has changed by the target amount, then at block 322, process 300 can generate a keystroke event signal. In some embodiments, the type of keystroke event signal can be determined based on the direction of change (e.g., right-arrow for positive direction, left-arrow for negative direction). At block 324, process 300 can store the new X encoder position value for use in the next iteration of the primary loop.

At block 330, process 300 determines whether deflection sensor 230 has detected a deflection. In some embodiments, deflection sensor 230 operates in a "pulsed" fashion, in which deflection sensor 230 detects a deflection based on a transition of switch control 130 into (or out of) a deflected state, so that each instance of deflecting and releasing switch control 130 results in incrementing magnification (up or down) to the next magnification factor supported by the virtual microscopy application. In other embodiments, deflection sensor 230 operates in a "continuous" fashion, in which deflection sensor 230 continues to detect a deflection for as long as switch control 130 remains in a deflected state, so that holding switch control 130 can repeatedly increment the magnification. In either case, if a deflection is detected at block 330, then at block 332, process 300 can generate a keystroke event signal. In some embodiments, the type of keystroke event signal can be determined based on the direction of deflection (e.g., increasing magnification for deflection to the right; decreasing magnification for deflection to the left), and one keystroke event signal is generated each time a deflection is detected at block 330.

At block 340, process 300 determines whether any button was pressed, e.g., based on signals from button sensors 232, 234. Button sensors 232, 234 can operate in a pulsed or continuous fashion, similarly to deflection sensor 230. If a button press is detected at block 340, then at block 342, process 300 can generate a keystroke event signal. In some embodiments, the type of keystroke event signal can be determined based on the particular button sensor that detected a button press, and one keystroke event signal is generated for each instance of detecting a button press at block 340.

At block 350, process 300 can wait for a prescribed interval before returning to block 310 to perform another iteration of primary loop 302. The prescribed interval can be, e.g., a few milliseconds (e.g., 1-10 ms). Primary loop 302 can continue indefinitely, e.g., until user input device 100 is disconnected from a computer system or power is turned off or some other termination event occurs. Each iteration of primary loop 302 can result in generating zero or more keystroke event signals, depending on the state of the controls.

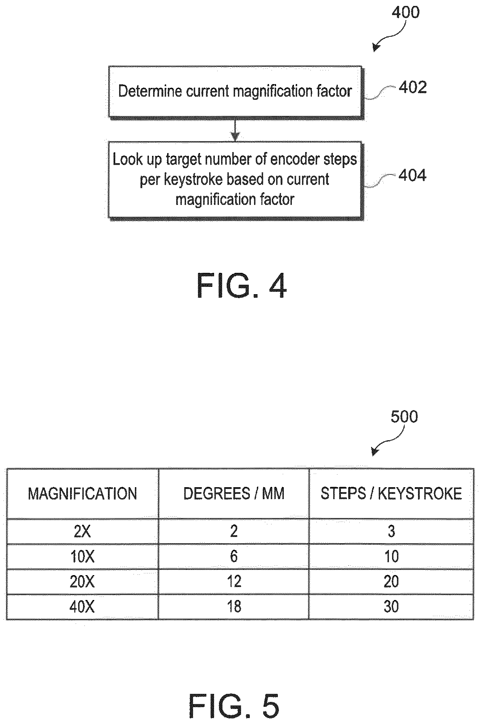

In some embodiments, the target amount of rotation of Y encoder 222 or X encoder 224 that results in generating a keystroke event signal in process 300 depends on the current magnification factor. FIG. 4 is a flow diagram of a process 400 that can be used in some embodiments to determine the target amount of rotation, e.g., for blocks 310 and/or 320 of process 300.

At block 402, process 400 can determine a current magnification factor. In some embodiments, the current magnification factor can be determined based on tracking the history of operation of switch control 130. For example, a stored value representing the current magnification factor can be initialized (e.g., at block 302 of process 300) to at a minimum value. Thereafter, the stored magnification value can be increased by one step for each rightward deflection of switch control 130 (up to a maximum magnification) or decreased by one step for each leftward deflection of switch control 130 (down to the minimum value). Thus, each time switch control 130 generates a keystroke event (e.g., at block 332 of process 300), the stored value representing the current magnification factor can be updated accordingly. This stored value can be read at block 402. Alternatively, in some embodiments, user input device 100 may be configured to obtain a current magnification value from the computer system to which it is coupled.

At block 404, process 400 can determine the number of encoder steps that maps to one keystroke event signal based on the current magnification factor. In some embodiments, a keystroke event signal is generated every time the encoder position changes by a target number of steps, with the target number being determined based on the current magnification factor. For example, FIG. 5 shows a lookup table 500 that can be used in some embodiments to determine the target number of steps per keystroke based on the magnification factor. In table 500, it is assumed that the available magnification factors are 2X, 10X, 20X, and 40X. It is also assumed that each movement keystroke event pans the image by a distance of 1 mm, and the center column lists the degrees of rotation of rotary control 122 (or 124) that are assigned as corresponding to 1 mm of movement of the image for each magnification factor. The third column maps the degrees of rotation in the center column to a target number of encoder steps, on the assumption that the encoder has 600 steps per 360 degrees of rotation. It should be understood that table 500 is illustrative and that any other combination of magnification factors and associated mappings can be supported. The particular assignment of the amount of rotation corresponding to a given amount of linear movement can be chosen based on the behavior of a physical microscope, and all values provided herein are illustrative and not limiting.

It will be appreciated that processes 300 and 400 are illustrative and that variations and modifications are possible. Blocks or operations described as being sequential may be performed in parallel, and order of blocks or operations may be modified except where logic dictates otherwise. Operations or blocks not shown may be added, and some operations or blocks that are shown may be omitted.

User input device 100 is reconfigurable to operate with different application programs that use different mappings of keystroke events to actions, different magnification factors, and so on. For example, using USB or Bluetooth or other conventional protocols, a configuration data file can be supplied to user input device 100. The configuration data file provides a mapping of actions to keystroke events (e.g., which keys correspond to increasing or decreasing magnification, movement of a displayed image in various directions, capturing a current image, annotating an image, and so on) as well as information about how the application program responds to various keystroke events (e.g., what magnification factors are available, how far a control is moved for each keystroke event, and so on). Based on the configuration data file, user input device 100 assigns keystroke event signals to be generated based on operation of each control and can generate a suitable lookup table (similar to table 500) for determining when to generate keystroke event signals from operation of the rotary controls. By providing different configuration files at different times, user input device 100 is reconfigured to interoperate with different software applications that define different keyboard controls.

It should also be noted that the foregoing description refers to virtual microscopy applications as suitable for operating with a user input device of the kind described herein. However, such a user input device can be employed for providing input to any application where images stored in a computer system are being viewed and manipulated (including panning and zooming) in an interactive manner.

While the invention has been described with reference to specific embodiments, those skilled in the art with access to this disclosure will recognize that variations and modifications are possible. Accordingly, the scope of the invention is defined by the attached claims.

## Claims

1. A user input device (100) for a computer system, the user input device comprising:
a housing (102) having a bottom surface (105) for resting on a table;
a processor (202) disposed within the housing (102); and
a communication interface (240) coupled to the processor (202) and connectable to a computer system,
wherein
the computer system is configured to execute an application program that displays an image and performs operations on the image in response to keystroke event signals that correspond to operation of particular keys of a keyboard;
the user input device comprises a plurality of user-operable controls including:a first user-operable rotary control (122) rotatably coupled to the housing; and
a second user-operable rotary control (124) rotatably coupled to the housing;
the processor (202) is configured to generate, responsive to operation of the first (122) and second user-operable rotary controls (124), one or more keystroke event signals representing operation of a key mapped to directional movement of the image displayed by the computer system and to transmit the one or more keystroke event signals to the computer system via the communication interface (240); and
the processor is further configured such that the one or more movement keystroke event signals are generated based on a configuration data file that provides a mapping of operations of the user-operable controls to keystroke event signals and wherein different configuration data files are provided to the user input device at different times to enable interoperation with different software applications that define different keyboard controls.

2. The user input device (100) of claim 1 wherein the first user-operable rotary control (122) and the second user-operable rotary control (124) are arranged along a common axis of rotation.

3. The user input device (100) of claim 2 wherein the common axis of rotation is a vertical axis.

4. The user input device (100) of claim 2 or 3 wherein the housing (102) includes a main body (107) supported above a base (104), and the common axis of rotation extends from the main body (107) to the base (104).

5. The user input device (100) of any one of claims 2 to 4 wherein the common axis of rotation is positioned near a front surface (108) of the housing (102).

6. The user input device (100) of any one of claims 1 to 5 wherein the processor (202) is further configured such that:
rotation of the first user-operable rotary control (122) in a first direction results in generating an up-arrow keystroke event signal;
rotation of the first user-operable rotary control (122) in a second direction results in generating a down-arrow keystroke event signal;
rotation of the second user-operable rotary control (124) in the first direction results in generating a right-arrow keystroke event signal; and
rotation of the second user-operable rotary control (124) in the second direction results in generating a left-arrow keystroke event signal.

7. The user input device (100) of any one of claims 1 to 6 wherein the processor (202) is further configured to determine, based on a current magnification factor, an amount of rotation of either the first (122) or second user-operable rotary controls (124) that results in generating a movement keystroke event signal.

8. The user input device (100) of any one of claims 1 to 7, wherein the plurality of user-operable controls further includes:
a user-operable switch control (130) disposed on the housing (102),
wherein the processor (202) is further configured to generate, responsive to operation of the user-operable switch control (130), a zooming keystroke event signal representing operation of a zooming key and to transmit the zooming keystroke event signal via the communication interface (240).

9. The user input device (100) of claim 8 wherein the user-operable switch control (130) is a lever-and-push switch that is deflectable in either of two directions and wherein the processor (202) is further configured to determine whether to generate an increase-magnification keystroke event signal or a decrease-magnification keystroke event signal based on the direction of deflection of the user-operable switch control (130).

10. The user input device (100) of claim 8 or 9 wherein the processor (202) is further configured to determine, based on a current magnification factor, an amount of rotation of either the first (122) or second user-operable rotary controls (124) that results in generating a movement keystroke event signal.

11. The user input device (100) of claim 10 wherein the processor (202) is further configured to determine the current magnification factor based at least in part on tracking of operation of the user-operable switch control (130).

12. The user input device (100) of any one of claims 1 to 11, wherein the plurality of user-operable controls further includes:
a first user-operable button control (132) disposed on the housing (102,
wherein the processor (202) is further configured to generate,
responsive to operation of the first user-operable button control (132), a capture keystroke event signal representing operation of an image capture key and to transmit the capture keystroke event signal via the communication interface (240).

13. The user input device (100) of any one of claims 1 to 12, wherein the plurality of user-operable controls further includes:
a second user-operable button control (134) disposed on the housing (102),
wherein the processor (202) is further configured to generate,
responsive to operation of the second user-operable button control (134), an annotation keystroke event signal representing operation of an image annotation key and to transmit the annotation keystroke event signal via the communication interface (240).

## Patentansprüche

1. Benutzereingabevorrichtung (100) für ein Computersystem, wobei die Benutzereingabevorrichtung Folgendes aufweist:
ein Gehäuse (102) mit einer Bodenfläche (105) zum Aufliegen auf einem Tisch;
einen Prozessor (202), der innerhalb des Gehäuses (102) angeordnet ist; und
eine Kommunikationsschnittstelle (240), die mit dem Prozessor (202) gekoppelt und mit einem Computersystem verbindbar ist, wobei
das Computersystem konfiguriert ist, um ein Anwendungsprogramm auszuführen, das ein Bild anzeigt und Operationen an dem Bild als Reaktion auf Tastenanschlagereignissignale durchführt, die der Betätigung bestimmter Tasten einer Tastatur entsprechen;
die Benutzereingabevorrichtung eine Vielzahl von benutzerbedienbaren Bedienelementen aufweist, einschließlich: eines ersten benutzerbedienbaren Drehbedienelements (122), das drehbar mit dem Gehäuse gekoppelt ist; und
eines zweiten benutzerbedienbaren Drehbedienelements (124), das drehbar mit dem Gehäuse gekoppelt ist;
der Prozessor (202) konfiguriert ist, um als Reaktion auf die Betätigung des ersten (122) und des zweiten benutzerbedienbaren Drehbedienelements (124) ein oder mehrere Tastenanschlagereignissignale zu erzeugen, die die Betätigung einer Taste darstellen, die der Richtungsbewegung des durch das Computersystem angezeigten Bildes zugeordnet ist, und um das eine oder die mehreren Tastenanschlagereignissignale über die Kommunikationsschnittstelle (240) an das Computersystem zu übertragen; und
der Prozessor ferner so konfiguriert ist, dass das eine oder die mehreren Bewegungs-Tastenanschlagereignissignale basierend auf einer Konfigurationsdatendatei erzeugt werden, die eine Zuordnung von Operationen der benutzerbedienbaren Bedienelemente zu Tastenanschlagereignissignalen bereitstellt, und wobei unterschiedliche Konfigurationsdatendateien der Benutzereingabevorrichtung zu unterschiedlichen Zeiten bereitgestellt werden, um die Zusammenarbeit mit unterschiedlichen Softwareanwendungen zu ermöglichen, die unterschiedliche Tastaturbedienelemente definieren.

2. Benutzereingabevorrichtung (100) nach Anspruch 1, wobei das erste benutzerbedienbare Drehbedienelement (122) und das zweite benutzerbedienbare Drehbedienelement (124) entlang einer gemeinsamen Drehachse angeordnet sind.

3. Benutzereingabevorrichtung (100) nach Anspruch 2, wobei die gemeinsame Drehachse eine vertikale Achse ist.

4. Benutzereingabevorrichtung (100) nach Anspruch 2 oder 3, wobei das Gehäuse (102) einen Hauptkörper (107) aufweist, der über einer Basis (104) getragen wird, und die gemeinsame Drehachse sich von dem Hauptkörper (107) zu der Basis (104) erstreckt.

5. Benutzereingabevorrichtung (100) nach einem der Ansprüche 2 bis 4, wobei die gemeinsame Drehachse nahe einer Vorderfläche (108) des Gehäuses (102) positioniert ist.

6. Benutzereingabevorrichtung (100) nach einem der Ansprüche 1 bis 5, wobei der Prozessor (202) ferner so konfiguriert ist, dass:
die Drehung des ersten benutzerbedienbaren Drehbedienelements (122) in einer ersten Richtung zur Erzeugung eines Tastenanschlagereignissignals nach oben führt;
die Drehung des ersten benutzerbedienbaren Drehbedienelements (122) in einer zweiten Richtung zur Erzeugung eines Tastenanschlagereignissignals nach unten führt;
die Drehung des zweiten benutzerbedienbaren Drehbedienelements (124) in der ersten Richtung zur Erzeugung eines Tastenanschlagereignissignals nach rechts führt; und
die Drehung des zweiten benutzerbedienbaren Drehbedienelements (124) in der zweiten Richtung zur Erzeugung eines Tastenanschlagereignissignals nach links führt.

7. Benutzereingabevorrichtung (100) nach einem der Ansprüche 1 bis 6, wobei der Prozessor (202) ferner konfiguriert ist, um basierend auf einem aktuellen Vergrößerungsfaktor einen Drehbetrag entweder des ersten (122) oder des zweiten benutzerbedienbaren Drehbedienelements (124) zu bestimmen, der zur Erzeugung eines Bewegungs-Tastenanschlagereignissignals führt.

8. Benutzereingabevorrichtung (100) nach einem der Ansprüche 1 bis 7, wobei die Vielzahl von benutzerbedienbaren Bedienelementen ferner aufweist:
ein benutzerbedienbares Schaltbedienelement (130), das an dem Gehäuse (102) angeordnet ist,
wobei der Prozessor (202) ferner konfiguriert ist, um als Reaktion auf die Betätigung des benutzerbedienbaren Schaltbedienelements (130) ein Zoom-Tastenanschlagereignissignal zu erzeugen, das die Betätigung einer Zoom-Taste darstellt, und um das Zoom-Tastenanschlagereignissignal über die Kommunikationsschnittstelle (240) zu übertragen.

9. Benutzereingabevorrichtung (100) nach Anspruch 8, wobei das benutzerbedienbare Schaltbedienelement (130) ein Hebel-und-Druck-Schalter ist, der in eine von zwei Richtungen ablenkbar ist, und wobei der Prozessor (202) ferner konfiguriert ist, um basierend auf der Ablenkrichtung des benutzerbedienbaren Schaltbedienelements (130) zu bestimmen, ob ein Tastenanschlagereignissignal mit zunehmender Vergrößerung oder ein Tastenanschlagereignissignal mit abnehmender Vergrößerung erzeugt werden soll.

10. Benutzereingabevorrichtung (100) nach Anspruch 8 oder 9, wobei der Prozessor (202) ferner konfiguriert ist, um basierend auf einem aktuellen Vergrößerungsfaktor einen Drehbetrag entweder des ersten (122) oder des zweiten benutzerbedienbaren Drehbedienelements (124) zu bestimmen, der zur Erzeugung eines Bewegungs-Tastenanschlagereignissignals führt.

11. Benutzereingabevorrichtung (100) nach Anspruch 10, wobei der Prozessor (202) ferner konfiguriert ist, um den aktuellen Vergrößerungsfaktor zumindest teilweise basierend auf der Verfolgung der Betätigung des benutzerbedienbaren Schaltbedienelements (130) zu bestimmen.

12. Benutzereingabevorrichtung (100) nach einem der Ansprüche 1 bis 11, wobei die Vielzahl von benutzerbedienbaren Bedienelementen ferner aufweist:
ein erstes benutzerbedienbares Tastenbedienelement (132), das an dem Gehäuse (102) angeordnet ist,
wobei der Prozessor (202) ferner konfiguriert ist, um als Reaktion auf die Betätigung des ersten benutzerbedienbaren Tastenbedienelements (132) ein Erfassungstastenanschlagereignissignal zu erzeugen, das die Betätigung einer Bilderfassungstaste darstellt, und um das Erfassungstastenanschlagereignissignal über die Kommunikationsschnittstelle (240) zu übertragen.

13. Benutzereingabevorrichtung (100) nach einem der Ansprüche 1 bis 12, wobei die Vielzahl von benutzerbedienbaren Bedienelementen ferner aufweist:
ein zweites benutzerbedienbares Tastenbedienelement (134), das an dem Gehäuse (102) angeordnet ist,
wobei der Prozessor (202) ferner konfiguriert ist, um als Reaktion auf die Betätigung des zweiten benutzerbedienbaren Tastenbedienelements (134) ein Anmerkungstastenanschlagereignissignal zu erzeugen, das die Betätigung einer Bildanmerkungstaste darstellt, und um das Anmerkungstastenanschlagereignissignal über die Kommunikationsschnittstelle (240) zu übertragen.

## Revendications

1. Un dispositif d'entrée utilisateur (100) pour un système informatique, le dispositif d'entrée utilisateur comprenant :
un boîtier (102) avec une surface de dessous (105) destinée à reposer sur une table,
un processeur (202) disposé à l'intérieur du boîtier (102) ; et
une interface de communication (240) couplée au processeur (202) et pouvant être connectée à un système informatique,
dans lequel :
le système informatique est configuré pour exécuter un programme applicatif qui affiche une image et qui exécute des opérations sur l'image en réponse à des signaux d'événement d'appui de touche qui correspondent à un actionnement de touches particulières d'un clavier ;
le dispositif d'entrée utilisateur comprend une pluralité de contrôles actionnables par l'utilisateur comprenant :
un premier contrôle rotatif actionnable par l'utilisateur (122) couplé à rotation au boîtier ; et
un second contrôle rotatif actionnable par l'utilisateur (124) couplé à rotation au boîtier ;
le processeur (202) est configuré pour générer, en réponse à l'actionnement du premier (122) et du second (124) contrôle rotatif actionnables par l'utilisateur, un ou plusieurs signaux d'événement d'appui de touche représentant l'actionnement d'une touche mappés à un mouvement directionnel de l'image affichée par le système informatique, et pour transmettre au système informatique les un ou plusieurs signaux d'événement d'appui de touche via l'interface de communication (240) ; et
le processeur est en outre configuré de telle manière que les un ou plusieurs signaux d'événement d'appui de touche de mouvement soient générés sur la base d'un fichier de données de configuration qui produit un mappage des actionnements des contrôles actionnables par l'utilisateur vers les signaux d'événement d'appui de touche, et dans lequel des fichiers de données de configuration différents sont appliqués à des instants différents au dispositif d'entrée utilisateur pour assurer une interopérabilité avec des applications logicielles différentes qui définissent des contrôles de clavier différents.

2. Le dispositif d'entrée utilisateur (100) de la revendication 1, dans lequel le premier contrôle rotatif actionnable par l'utilisateur (122) et le second contrôle rotatif actionnable par l'utilisateur (124) sont agencés le long d'un axe de rotation commun.

3. Le dispositif d'entrée utilisateur (100) de la revendication 2, dans lequel l'axe commun de rotation est un axe vertical.

4. Le dispositif d'entrée utilisateur de la revendication 2 ou 3, dans lequel le boîtier (102) comprend un corps principal (107) supporté au-dessus d'une base (104), et l'axe de rotation commun s'étend du corps principal (107) à la base (104).

5. Le dispositif d'entrée utilisateur (100) de l'une des revendications 1 à 4, dans lequel l'axe de rotation commun est positionné à proximité d'une surface avant (108) du boîtier (102).

6. Le dispositif d'entrée utilisateur (100) de l'une des revendications 1 à 5, dans lequel le processeur (202) est en outre configuré de telle manière que :
la rotation dans un premier sens du premier contrôle rotatif actionnable par l'utilisateur (122) produise la génération d'un signal d'événement d'appui de touche flèche vers le haut ;
la rotation dans un second sens du premier contrôle rotatif actionnable par l'utilisateur (122) produise la génération d'un signal d'événement d'appui de touche flèche vers le bas ;
la rotation dans le premier sens du second contrôle rotatif actionnable par l'utilisateur (124) produise la génération d'un signal d'événement d'appui de touche flèche droite ; et
la rotation dans le second sens du second contrôle rotatif actionnable par l'utilisateur (124) produise la génération d'un signal d'événement de touche flèche gauche.

7. Le dispositif d'entrée utilisateur (100) de l'une des revendications 1 à 6, dans lequel le processeur (202) est en outre configuré pour déterminer, sur la base d'un facteur de grossissement courant, un degré de rotation de l'un ou l'autre du premier (122) ou du second (124) contrôle rotatif actionnables par l'utilisateur qui produit la génération d'un signal d'événement d'appui de touche de mouvement.

8. Le dispositif d'entrée utilisateur (100) de l'une des revendications 1 à 7, dans lequel la pluralité de contrôles actionnables par l'utilisateur comprend en outre :
un contrôle à commutateur actionnable par l'utilisateur (130), disposé sur le boîtier (102),
dans lequel le processeur (202) est en outre configuré pour générer, en réponse à un actionnement du contrôle à commutateur actionnable par l'utilisateur (130), un signal d'événement d'appui de touche de zoom représentant l'actionnement d'une touche de zoom, et pour transmettre le signal d'événement d'appui de touche de zoom via l'interface de communication (240).

9. Le dispositif d'entrée utilisateur (100) de la revendication 8, dans lequel le contrôle à commutateur actionnable par l'utilisateur (130) est un commutateur à levier-poussoir qui peut être incliné dans l'un ou l'autre de deux sens, et dans lequel le processeur (202) est en outre configuré pour déterminer s'il y a lieu de générer un signal d'événement d'appui de touche d'augmentation de grossissement ou bien un signal d'événement d'appui de touche de diminution de grossissement, en fonction du sens d'inclinaison du contrôle à commutateur actionnable par l'utilisateur (130).

10. Le dispositif d'entrée utilisateur (100) de la revendication 8 ou 9, dans lequel le processeur (202) est en outre configuré pour déterminer, sur la base d'un facteur courant de grossissement, un degré de rotation de l'un ou l'autre du premier (122) ou du second (124) contrôle rotatif actionnables par l'utilisateur qui produit la génération d'un signal d'événement d'appui de touche de mouvement.

11. Le dispositif d'entrée utilisateur (100) de la revendication 10, dans lequel le processeur (202) est en outre configuré pour déterminer le facteur de grossissement courant au moins en partie sur la base du suivi de l'actionnement du contrôle à commutateur actionnable par l'utilisateur (130).

12. Le dispositif d'entrée utilisateur (100) de l'une des revendications 1 à 11, dans lequel la pluralité de contrôles actionnables par l'utilisateur comprennent en outre :
un premier contrôle à bouton actionnable par l'utilisateur (132), disposé sur le boîtier (102),
dans lequel le processeur (202) est en outre configuré pour générer, en réponse à l'actionnement du premier contrôle à bouton actionnable par l'utilisateur (132), un signal d'événement d'appui de touche de capture représentant l'actionnement d'une touche de capture d'image, et pour transmettre le signal d'événement d'appui de touche de capture via l'interface de communication (240).

13. Le dispositif d'entrée utilisateur (100) de l'une des revendications 1 à 12, dans lequel la pluralité de contrôles actionnables par l'utilisateur comprennent en outre :
un second contrôle à bouton actionnable par l'utilisateur (134), disposé sur le boîtier (102),
dans lequel le processeur est en outre configuré pour générer, en réponse à l'actionnement du second contrôle par bouton actionnable par l'utilisateur (134) un signal d'événement d'appui de touche d'annotation représentant l'actionnement d'une touche d'annotation d'image, et pour transmettre le signal d'événement d'appui de touche d'annotation via l'interface de communication (240).
